# FASCICULE DE BREVET EUROPEEN

(11) **EP 2 652 852 B1**
(45) Date de publication et mention de la délivrance du brevet: **09.11.2016**
(21) Numéro de dépôt: 11811092.3
(22) Date de dépôt: 12.12.2011
(51) Int. Cl.: H02G 3/04, H02G 3/06

(54) **ELÉMENT DE CHEMINEMENT DE CÂBLES ÉLECTRIQUES OU AUTRES CONDUITS SIMILAIRES, ET PROCÉDÉ D'OBTENTION D'UN TEL ÉLÉMENT**
LEITUNGSELEMENT FÜR ELEKTRISCHE KABEL ODER ÄHNICHLE KONDUKTEN, UND DAS HERSTELLUNGSVERFAHREN DESGLEICHEN
ELECTRICAL CABLES OR SIMILAR CONDUCTING STRUCTURE PATH ELEMENT AND THE OBTENTION PROCESS OF THE SAME.

(30) Priorité: 13.12.2010 FR 1060400
(43) Date de publication de la demande: 23.10.2013
(73) Titulaire: CQFD Composites, 68270 Wittenheim (FR)
(72) Inventeur: CHAUZU, Frank, F-67210 Obernai (FR)
(74) Mandataire: Brungard, Yves Francois
(86) Numéro de dépôt international: PCT/FR2011/052954
(87) Numéro de publication internationale: WO 2012/080645

(56) Documents cités:
- FR-A1- 2 917 912
- FR-A1- 2 917 913
- FR-A1- 2 920 600

## Description

La présente invention concerne un élément de cheminement de câbles électriques ou autres conduits similaires, et un procédé spécifique pour l'obtention d'un tel élément.

Il est déjà bien connu, en particulier dans des installations industrielles, d'utiliser des supports, communément appelés chemins de câbles ou échelles à câbles, pour guider et supporter des câbles électriques, de télécommunication, ou même des conduits de transport de fluides, généralement sur de grandes longueurs, et permettre de regrouper dans un même support plusieurs câbles ou conduits disposés parallèlement. A cette fin, ces dispositifs de cheminement de câbles ont classiquement une section transversale en forme de U. Par la suite, on désignera également par «chemin de câbles» les éléments de tous types utilisés pour réaliser de tels cheminements de câbles ou autres conduits.

Actuellement, ces chemins de câbles sont le plus souvent réalisés en acier pour des raisons économiques.

Plus particulièrement, les chemins de câbles peuvent être de deux types :
- les systèmes dit «fermés», dans lesquels les parois des chemins de câbles sont essentiellement continues, par exemple sous forme de tôle pliée appelée « dalle », ou de profilés en matière plastique extrudée ou en matériau composite pultrudé,
- les systèmes dits «ouverts». Dans cette catégorie, on trouve notamment les échelles à câbles, les chemins de câbles de type treillis métallique, encore appelés systèmes « fil », formés de fils métalliques assemblés entre eux généralement par soudure, et aussi les chemins de câbles formés par assemblages d'éléments structurels allongés constituant les longerons latéraux, généralement en matériau électriquement isolant, reliés par des barreaux transversaux également isolants, ces éléments étant généralement réalisés en matière plastique (telle que du PA6, renforcé au non) ou composites (Polyester ou polyamide renforcé de fibres de verre continues), tels que ceux qui sont décrits par exemple dans FR2917912, FR2917913, FR2920600.

Les chemins de câbles métalliques nécessitent une mise à la terre pour pallier les risques d'électrification par contact avec un câble conducteur. Les opérations de mise à la terre sont d'autant plus contraignantes qu'elles doivent assurer une mise à la terre effective de chaque élément du chemin de câble.

Les chemins de câbles en matière plastique ou composite présentent l'avantage d'être électriquement isolants, ce qui supprime les risques d'électrification existants avec les chemins de câbles métalliques, et donc évite la nécessité de les mettre à la terre. En revanche, les chemins de câble en matière plastique ne sont pas très rigides ni très résistants globalement.

Un autre inconvénient, en particulier dans le cas de chemin de câbles de type « fil » en matériaux composite à fibres longues, est que les matériaux composites utilisés ont une forte capacité de déformation, mais ils n'ont quasiment pas de plage de déformation plastique permanente. C'est-à-dire que, si par exemple les longerons d'un tel chemin de câbles sont pliés ou cintrés pour conformer un chemin de câbles avec des changements de direction, les longerons se révèlent essentiellement élastiques et, dès que l'effort de cintrage est supprimé, ils ne conservent pas la forme dans laquelle ils avaient précédemment été amenés. Il en résulte qu'il est difficile de préparer un élément de chemin de câbles de ce type avec une forme non rectiligne par un simple cintrage, pliage ou torsion, d'un élément rectiligne, sans utilisation de moyens complémentaires pour conserver la forme donnée au cours de ces opérations de déformation.

La présente invention a pour but de supprimer les inconvénients évoqués ci-dessus, et vise en particulier à proposer des chemins de câbles qui sont électriquement isolants, donc sans nécessité de mise à la terre, qui présentent une résistance mécanique améliorée et dont la mise en oeuvre reste aisée même lorsqu'il est nécessaire de leur donner une forme non rectiligne.

Avec ces objectifs en vue, l'invention a pour objet un élément de cheminement de câbles, comportant une structure porteuse rigide qui comprend des éléments de structure longitudinaux en matière plastique ou composite électriquement isolante et des éléments de structure transversaux également en matériau isolant reliant les éléments de structure longitudinaux.

Selon l'invention, l'élément de cheminement de câbles est caractérisé en ce qu'au moins certains des éléments de structure longitudinaux comportent au moins un fil métallique logé dans la matière plastique ou composite qui les constitue.

Les caractéristiques physico-chimiques et dimensionnelles du fil ou des fils, notamment la nature du métal et les formes et dimensions de la section du fil, et la position du ou des fils dans la section des éléments de structure longitudinaux ainsi que, dans le cas où il y a plusieurs fils, la disposition relative de ceux-ci, sont préférentiellement déterminées de manière que, après une déformation de flexion, ou de torsion, d'un élément de structure longitudinal, la résistance mécanique du ou des fil(s) métallique(s) déformé(s) soit suffisante pour compenser l'effort de retour élastique de la matière plastique ou composite. De plus, les fils métalliques, préférentiellement en acier, pourront contribuer à améliorer la résistance mécanique de l'élément de chemin de câbles.

Selon une disposition particulière, certains des éléments de structure longitudinaux comportent plusieurs fils métalliques logés dans la matière plastique ou composite qui les constitue, et disposés de manière à présenter, grâce à leur agencement, une inertie (rigidité) supérieure à celle qui serait obtenue par l'utilisation d'un fil unique, et cela pour une même section globale des fils, donc pour une même masse de matière métallique. Cette configuration présente donc l'avantage de pouvoir réduire la quantité de matière métallique, pour une rigidité donnée, et donc d'obtenir un produit plus léger. De surcroît, elle facilite la fabrication des éléments de structure longitudinaux grâce à un déroulage plus aisé de fils de plus faibles dimensions.

Par la suite, sauf indication explicitement contraire, on désignera par « fil » tout ensemble de fils comportant un ou plusieurs fils métalliques, de même nature ou non, situés dans un même élément de structure longitudinal.

Un fil logé dans un élément de structure longitudinal donné est isolé électriquement de tout autre élément de la structure porteuse, sauf éventuellement d'un autre élément de structure longitudinal qui se trouverait connecté en alignement avec ledit élément de structure longitudinal.

Le fil métallique noyé dans la tige isolante est isolé électriquement du reste de la structure et ne peut donc avoir de contact électrique avec les câbles portés par l'élément de cheminement de câbles, ni avec le reste de la structure, et il ne peut donc pas propager de courant électrique, notamment dans les éléments de structure transversaux constituant le fond et qui supportent les câbles.

Un avantage important d'un chemin de câbles ainsi réalisé est qu'il conserve donc les qualités d'isolation électrique des chemins de câbles plastiques ou composites, tout en bénéficiant des capacités de déformations permanentes et de la rigidité des systèmes métalliques.

On notera que des chemins de câble de type treillis qui seraient revêtus d'une couche de peinture, ou qui seraient plastifiés n'assureraient pas, comme le fait la présente invention, la non-propagation de courants électriques, du fait des liaisons soudés entre les fils constitutifs. Dans une telle structure, un défaut d'isolement localisé conduirait à une électrification globale du treillis métallique, avec un risque certain pour les personnes au cas où un autre défaut d'isolation se produirait, quelle que soit la localisation de ce dernier.

En général, le fil métallique s'étendra sur toute la longueur d'un élément de chemin de câbles. Il est aussi possible de placer un tel fil uniquement dans certaines zones plus particulièrement destinées à être déformées et/ou reprenant les efforts de chargement, ou encore de n'utiliser un élément de chemin de câbles avec fil métallique que pour les tronçons d'un chemin de câbles qui doivent être pliés ou cintrés, les autres éléments constituant le chemin de câbles restant des éléments de chemin de câbles entièrement en plastique ou composite, sans fil métallique.

Le fil métallique sera généralement logé uniquement dans les éléments de structure longitudinaux. Cependant, les éléments de structure transversaux peuvent aussi être armés par un fil métallique comme les barres longitudinales, dans la mesure où aucun élément métallique d'un tel élément de structure transversal n'est susceptible d'assurer une liaison électrique par contact métallique avec les fils des éléments de structure longitudinaux.

L'invention a aussi pour objet un procédé de fabrication d'un élément de chemin de câbles tel que défini ci-dessus caractérisé en ce que les éléments de structure longitudinaux sont réalisés par un procédé de co-extrusion ou co-pultrusion dans lequel la matière plastique ou composite est co-extrudée ou co-pultrudée autour d'un fil métallique entraîné en défilement dans la tête d'extrusion d'une machine de co-extrusion.

D'autres caractéristiques et avantages apparaîtront dans la description qui va être faite de plusieurs exemples de chemins de câbles conformes à l'invention.

On se reportera aux dessins annexés dans lesquels :
- la figure 1 est une vue en perspective d'un élément de chemin de câbles conforme à l'invention, présentant un dénivelé,
- la figure 2 est une vue de dessus d'un élément de chemin de câbles cintré dans un plan horizontal,
- la figure 3 est une vue de dessus d'un élément de chemin de câbles avec un cintrage plus prononcé, ou pli à angle droit,
- la figure 4 et une vue en coupe transversale d'un élément de chemin de câbles selon l'invention,
- les figures 5A à 5F illustrent différentes variantes de réalisation d'une barre constitutive d'un élément de structure longitudinal d'un chemin de câbles selon l'invention,
- la figure 6 est une vue en perspective partielle d'un autre mode de réalisation d'un élément de chemin de câbles conforme à l'invention.

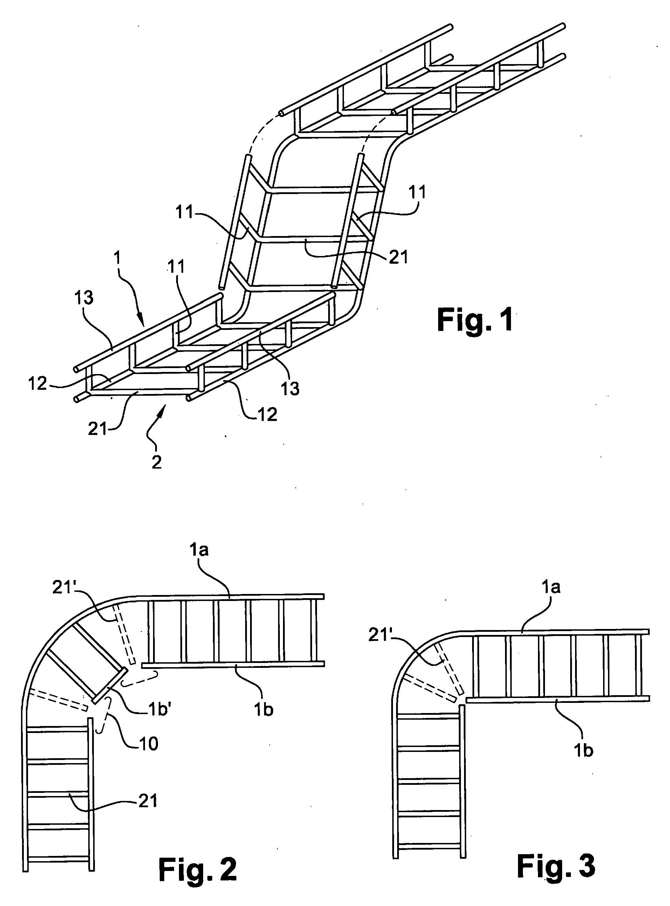

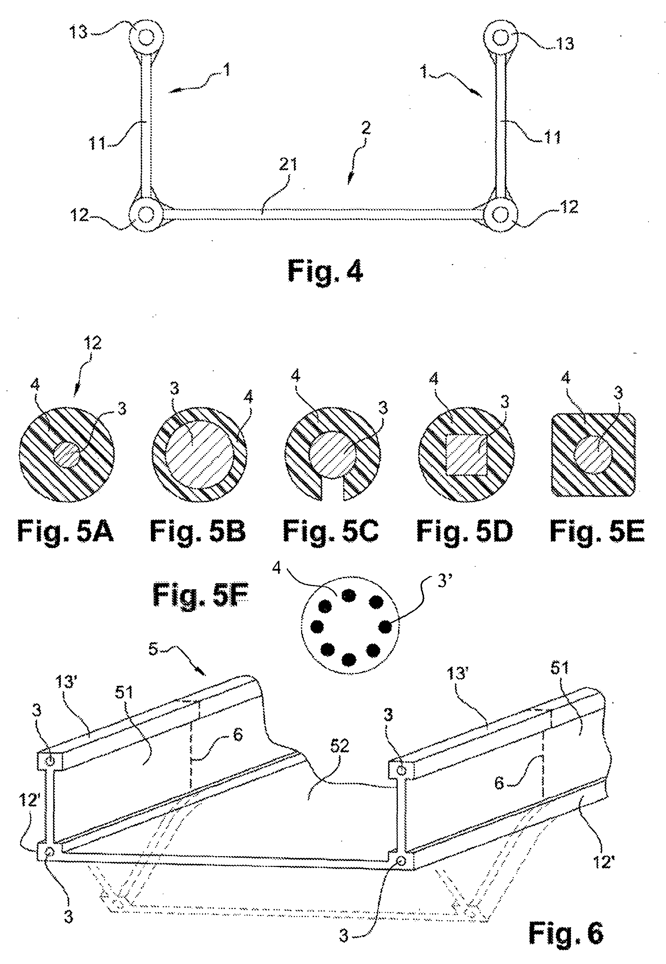

L'élément de chemins de câbles représenté figure 1 comporte une structure porteuse, qui peut être du type décrit par exemple dans FR2917912, FR2917913, FR2920600 précités, comportant des longerons latéraux 1 formés d'entretoises 11 reliant des barres longitudinales 12 et 13. La structure porteuse comporte aussi un fond 2 formé par des traverses 21 qui relient les barres longitudinales 12 inférieures des deux longerons, pour former une structure ayant une section en forme de U, visible figure 4. Les entretoises 11 et les traverses 21 sont réparties régulièrement sur la longueur de l'élément de chemins de câbles, les traverses assurant le supportage des câbles.

Les barres longitudinales 12 et 13 sont réalisées en matière composite, par exemple en Polyamide 6 (PA6) renforcé de fibres minérales (fibres de verre, de basalte, etc.) ou de fibres naturelles continues (fibres de lin, de chanvre, etc.) dans des taux pouvant varier, par exemple, entre 20% et 85% en masse du composite, et comporte une âme 3 faite d'un fil en acier qui se trouve donc entouré, au moins sur une majeure partie de sa circonférence, par la matière composite 4.

Les entretoises 11 et les traverses 21 sont en matière plastique, renforcée ou non de fibres courtes par exemple, et liées aux dites barres par collage, soudage, ou tout autre moyen de liaison, comme par exemple indiqué dans les documents de brevets précités.

Toutefois, les entretoises 11 et/ou les traverses 21 pourraient aussi être armées par un fil métallique comme les barres longitudinales, dans la mesure où ce fil est agencé pour qu'il ne puisse pas venir en contact avec les fils insérés dans lesdites barres longitudinales, de manière à garantir qu'aucun des différents inserts en fil ne soit en contact avec un autre.

Les figures 5A à 5E montrent à titre d'exemples non limitatifs plusieurs variantes de section des barres, illustrant les possibilités d'utiliser des fils métalliques 3 unitaires de section de formes diverses : rond, carré, ovale, etc. et de dimensions également diverses, pouvant être déterminées notamment en fonction des caractéristiques mécaniques des matériaux en présence, de manière à obtenir l'effet de déformation permanente assurée et/ou la rigidité mécanique suffisante. On notera aussi que la forme extérieure de la barre peut être variée, circulaire, ou carrée (figure 5E) ou toute autre forme désirée, et telle que la matière plastique ou composite entoure totalement le fil métallique, ou présente une section partiellement ouverte montrée figure 5C.

Typiquement, les barres peuvent avoir un diamètre de 6 à 10 mm, et le fil en acier de 3 à 5 mm. A titre d'exemple, la barre est en PVC rigide extrudé. Le fil métallique est un acier galvanisé à froid, de diamètre 4 mm pour une barre de diamètre 7 mm.

La figure 5F montre une autre variante de section des barres, illustrant la possibilité d'utiliser plusieurs fils métalliques 3' disposés dans la même barre. A titre d'exemple, une barre 12 de 8 mm de diamètre en PVC munie d'un fil métallique de 4 mm de diamètre ayant une masse de 96 g/mm et présentant une inertie du fil de 12,50 mm4 peut être avantageusement remplacé, pour une même masse de 96 g/m, par 8 fils de 1,4 mm de diamètre, répartis comme sur la figure 5F et présentant globalement une inertie plus de quatre fois supérieure, de 56,9 mm4.

Les figures 2 et 3 illustrent un cintrage à grand rayon et un autre à petit rayon ou pliage à angle droit, d'un élément de chemin de câbles selon l'invention à l'horizontale, dans le plan du fond.

Dans le cas d'un cintrage à relativement grand rayon illustré figure 2, le longeron la situé vers l'extérieur de la courbure est conservé d'un seul tenant alors que le longeron 1b situé du côté intérieur de la courbure est coupé en deux endroits et une partie médiane 1b' est conservée, cette partie médiane pouvant être raccordée ensuite selon besoin aux parties de longerons adjacentes par des agrafes ou similaires 10. Certaines traverses telles que 21' peuvent être supprimées selon besoins.

Dans le cas d'un cintrage à petit rayon illustré figure 3, le longeron la situé vers l'extérieur de la courbure est aussi conservé d'un seul tenant alors qu'une portion du longeron 1b situé du côté intérieur de la courbure est complètement supprimée, de même que les traverses 21' selon besoin.

On pourra bien sûr adapter de manière similaire en fonction des besoins le rayon et l'angle de cintrage du chemin de câbles.

La figure 6 illustre un autre mode de réalisation dans lequel le chemin de câbles est essentiellement un profilé 5 en matière plastique ou composite à parois pleines 51, 52, c'est-à-dire du type « dalle » évoqué précédemment, et comportant des fils métalliques 3 noyés au niveau des renforts d'angles 12' du profil en U et éventuellement aussi au niveau des renforts de bords supérieurs 13' des parois latérales. Ainsi qu'on l'a représenté en traits pointillés, pour plier ou cintrer de manière permanente le chemin de câbles, il suffit de couper les parois des longerons (tracé 6) puis de plier le fond du U avec les renforts d'angle inférieurs 12' comportant les fils métalliques. Un tel élément de chemin de câbles peut être obtenu directement par extrusion, les barres longitudinales étant co-extrudées directement sur les fils métalliques.

Il est aussi possible de placer un fil métallique uniquement dans la barre longitudinale inférieure de chaque longeron, c'est-à-dire l'élément de structure situé au niveau du fond de l'élément de chemin de câbles, dans la mesure où, comme représenté figures 1 et 6, ce sont les barres supérieures 13, 13' qui sont coupées pour permettre le cintrage du chemin de câbles dans un plan vertical.

## Revendications

1. Elément de cheminement de câbles, comportant une structure porteuse rigide qui comprend des éléments de structure longitudinaux (12, 13 ; 12', 13') en matière plastique ou composite électriquement isolante et des éléments de structure transversaux (11, 21 ; 51, 52) reliant les éléments de structure longitudinaux, **caractérisé en ce que** au moins certains des éléments de structure longitudinaux comportent au moins un fil métallique (3, 3') logé dans la matière plastique ou composite (4) qui les constitue.

2. Elément de cheminement de câbles selon la revendication 1, **caractérisé en ce qu'**un fil (3,3') logé dans un élément de structure longitudinal (12) donné est isolé électriquement de tout autre élément de la structure porteuse qui ne se trouve pas en alignement avec ledit élément de structure longitudinal.

3. Elément de cheminement de câbles selon la revendication 1, **caractérisé en ce que** les caractéristiques physico-chimiques et dimensionnelles du fil ou des fils métalliques(s) (3, 3') et leurs positions dans la section des éléments de structure longitudinaux sont déterminées de manière que, après une déformation de flexion, ou de torsion, d'un élément de structure longitudinal, la résistance mécanique du ou des fil(s) métallique(s) déformé(s) soit suffisante pour compenser l'effort de retour élastique de la matière plastique ou composite.

4. Elément de cheminement de câbles selon la revendication 1, **caractérisé en ce que** certains des éléments de structure longitudinaux comportent plusieurs fils métalliques (3') logés dans la matière plastique ou composite (4) qui les constitue.

5. Elément de cheminement de câbles selon la revendication 1, **caractérisé en ce qu'**un fil métallique (3) est placé uniquement dans l'élément de structure longitudinal (12) situé au niveau des éléments de structure transversaux formant le fond de l'élément de chemin de câbles.

6. Elément de cheminement de câbles selon la revendication 1, **caractérisé en ce que** le fil métallique (3) s'étend sur toute la longueur d'un élément de chemin de câbles.

7. Elément de cheminement de câbles selon la revendication 1, **caractérisé en ce que** le fil métallique (3) est placé uniquement dans certaines zones plus particulièrement destinées à être déformées.

8. Elément de cheminement de câbles selon la revendication 1, **caractérisé en ce que** le fil métallique (3) est logé uniquement dans les éléments de structure longitudinaux (12, 13).

9. Elément de cheminement de câbles selon la revendication 1, **caractérisé en ce que** les éléments de structure transversaux sont armés par des fils métalliques agencés de manière à assurer qu'aucune liaison électrique n'existe avec les fils des éléments de structure longitudinaux.

10. Elément de cheminement de câbles selon la revendication 1, **caractérisé en ce qu'**il est constitué par un profilé en U (5) en matière plastique ou composite à parois pleines (51, 52) et comporte des fils métalliques (3) noyés au niveau de renforts d'angles (12') du profil en U.

11. Procédé de fabrication d'un élément de cheminement de câbles selon la revendication 1, **caractérisé en ce que** les éléments de structure longitudinaux (12, 13) sont réalisés par un procédé de co-extrusion ou co-pultrusion dans lequel la matière plastique ou composite (4) est co-extrudée, ou co-pultrudée, autour d'un fil métallique (3).

## Patentansprüche

1. Kabelführungselement, bestehend aus einer steifen Tragekonstruktion, welche längs verlaufende (12, 13, 12', 13') Strukturelemente aus elektrisch isolierendem Kunststoff oder Verbundwerkstoff umfasst sowie quer verlaufende (11, 21, 51, 52) Strukturelemente, mit denen die längs verlaufenden Strukturelemente verbunden sind, **dadurch gekennzeichnet, dass** zumindest in einigen der längs verlaufenden Strukturelementen aus Kunststoff oder Verbundwerkstoff (4) wenigstens ein Draht (3, 3') eingebettet ist.

2. Kabelführungselement nach Anspruch 1, **dadurch gekennzeichnet, dass** ein Draht (3, 3'), der in einem längs verlaufenden Strukturelement (12) eingebettet ist, von jedem anderen Element der Tragekonstruktion elektrisch isoliert ist, das nicht mit besagtem längs verlaufenden Strukturelement auf einer Linie liegt.

3. Kabelführungselement nach Anspruch 1, **dadurch gekennzeichnet, dass** die physikalisch-chemischen Merkmale und Dimensionen des Drahtes bzw. der Drähte (3, 3') und ihre Positionen im Querschnitt der längs verlaufenden Strukturelemente so gestaltet sind, dass nach einer Verbiegung oder Verdrehung eines längs verlaufenden Strukturelements die mechanische Festigkeit des bzw. der verformten Drähte ausreicht, um die Rückfederungskraft des Kunststoffs oder des Verbundwerkstoffs zu kompensieren.

4. Kabelführungselement nach Anspruch 1, **dadurch gekennzeichnet, dass** in einigen der längs verlaufenden Strukturelemente aus Kunststoff oder Verbundwerkstoff (4) mehrere Drähte (3') eingebettet sind.

5. Kabelführungselement nach Anspruch 1, **dadurch gekennzeichnet, dass** ein Draht (3) nur in das längs verlaufende Strukturelement (12) eingebettet ist, dass sich im Bereich jener quer verlaufenden Strukturelemente befindet, welche den Boden des Kabelführungselements bilden.

6. Kabelführungselement nach Anspruch 1, **dadurch gekennzeichnet, dass** der Draht (3) sich über die ganze Länge eines Kabelführungselements erstreckt.

7. Kabelführungselement nach Anspruch 1, **dadurch gekennzeichnet, dass** der Draht (3) nur in gewissen, speziell zur Verformung bestimmten Zonen platziert ist.

8. Kabelführungselement nach Anspruch 1, **dadurch gekennzeichnet, dass** der Draht (3) nur in den längs verlaufenden Strukturelementen (12, 13) eingebettet ist.

9. Kabelführungselement nach Anspruch 1, **dadurch gekennzeichnet, dass** die quer verlaufenden Strukturelemente durch Drähte verstärkt werden, die so angeordnet sind, dass mit den Drähten der längs verlaufenden Strukturelemente keine elektrische Verbindung besteht.

10. Kabelführungselement nach Anspruch 1, **dadurch gekennzeichnet, dass** es aus einem U-Profil (5) aus Kunststoff oder Verbundwerkstoff mit geschlossenen Seiten (51, 52) besteht und Drähte (3) aufweist, die im Bereich der Eckverstärkungen (12') des U-Profils eingebettet sind.

11. Fertigungsverfahren eines Kabelführungselements nach Anspruch 1, **dadurch gekennzeichnet, dass** die längs verlaufenden Strukturelemente (12, 13) im Co-Extrusions- oder Co-Pultrusionsverfahren hergestellt werden, wobei der Kunststoff oder der Verbundwerkstoff (4) um einen Draht (3) co-extrudiert bzw. co-pultrudiert wird.

## Claims

1. Cable routing element, comprising a rigid support structure which includes electrically insulating plastic or composite longitudinal structural elements (12, 13; 12', 13') and transverse structural elements (11, 21; 51, 52) connecting the longitudinal structural elements, **characterised in that** at least some of the longitudinal structural elements comprise at least one metallic wire (3, 3') housed in the plastic or composite material (4) comprising them.

2. Cable routing element according to claim 1, **characterised in that** a wire (3, 3') housed in a given longitudinal structural element (12) is electrically insulated from all other elements of the support structure which is not found in alignment with said longitudinal structural element.

3. Cable routing element according to claim 1, **characterised in that** the physicochemical and dimensional characteristics of the metallic wire or wires (3, 3') and their positions in the section of the longitudinal structural elements are determined in a manner so that, after a bending or twisting deformation of a longitudinal structural element, the mechanical strength of the deformed metallic wire or wires is sufficient to compensate for the springback force of the plastic or composite material.

4. Cable routing element according to claim 1, **characterised in that** some of the longitudinal structural elements comprise several metallic wires (3') housed in the plastic or composite material (4) comprising them.

5. Cable routing element according to claim 1, **characterised in that** a metallic wire (3) is placed only in the longitudinal structural element (12) located at the transverse structural elements forming the bottom of the cable route element.

6. Cable routing element according to claim 1, **characterised in that** the metallic wire (3) extends over the complete length of a cable route element.

7. Cable routing element according to claim 1, **characterised in that** the metallic wire (3) is placed only in certain areas more especially intended to be deformed.

8. Cable routing element according to claim 1, **characterised in that** the metallic wire (3) is housed only in the longitudinal structural elements (12, 13).

9. Cable routing element according to claim 1, **characterised in that** the transverse structural elements are reinforced by metallic wires arranged in a manner to ensure that no electrical link exists with the wires of the longitudinal structural elements.

10. Cable routing element according to claim 1, **characterised in that** it consists of a plastic or composite material U-section (5) with solid walls (51, 52) and comprises metallic wires (3) embedded at the corner reinforcements (12') of the U-section.

11. Process for manufacturing a cable routing element according to claim 1, **characterised in that** the longitudinal structural elements (12, 13) are made by a co-extrusion or co-pultrusion process in which the plastic or composite material (4) is co-extruded or co-pultruded around a metallic wire (3).
